# EUROPÄISCHE PATENTSCHRIFT

(11) **EP 3 359 858 B1**
(45) Veröffentlichungstag und Bekanntmachung des Hinweises auf die Patenterteilung: **07.06.2023**
(21) Anmeldenummer: 16741862.3
(22) Anmeldetag: 22.07.2016
(51) Int. Cl.: F16L 11/24, F16L 55/165, B29C 53/58, B32B 1/00, B32B 1/08, B32B 5/02, B32B 5/08, B32B 5/22, B32B 5/24, B32B 5/26, B32B 27/06, B32B 27/08, B32B 27/16, B32B 27/32, B32B 27/34

(54) **AUSKLEIDUNGSSCHLAUCH FÜR DIE KANALSANIERUNG SOWIE VERFAHREN ZUR HERSTELLUNG EINES SOLCHEN**
LINER TUBE FOR SEWER REHABILITATION AND METHOD FOR PRODUCING SAME
TUYAU DE REVÊTEMENT POUR LA RÉNOVATION DE CANALISATIONS ET PROCÉDÉ DE FABRICATION ASSOCIÉ

(30) Priorität: 06.10.2015 DE 102015012852; 28.10.2015 DE 102015013856
(43) Veröffentlichungstag der Anmeldung: 15.08.2018
(73) Patentinhaber: Brandenburger Liner GmbH & Co. KG, 76829 Landau/Pfalz (DE)
(72) Erfinder: DUTTENHÖFER, Peter, 76831 Ilbesheim (DE)
(74) Vertreter: Kesselhut, Wolf
(86) Internationale Anmeldenummer: PCT/EP2016/001277
(87) Internationale Veröffentlichungsnummer: WO 2017/059936

(56) Entgegenhaltungen:
- EP-A1- 2 573 442
- WO-A1-95/04646
- WO-A1-2011/006618
- DE-A1- 3 039 764
- DE-A1- 3 045 036
- DE-A1-102011 105 592
- US-A- 5 411 060
- US-A1- 2015 246 501

## Beschreibung

Die Erfindung betrifft einen Auskleidungsschlauch für die Kanalsanierung sowie ein Verfahren zur Herstellung eines solchen gemäß dem Oberbegriff von Anspruch 1 und 9.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Liner" bezeichnet werden und aus einem gewickelten Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird.

Ein solcher, in den zugehörigen Fachkreisen und nachfolgend auch als "Glasliner" bezeichneter Auskleidungsschlauch sowie ein Verfahren zur Herstellung eines solchen sind beispielsweise aus der WO-A 95/04646 sowie der DE 30 39764 A1 bekannt.

Die WO 2011/006618 A1 beschreibt einen Auskleidungsschlauch, der wenigstens zwei übereinander gewickelte unterschiedliche Faserbänder aufweist, die sich in ihrer Faserrichtung, Faserorientierung, Faserlänge oder Faserart unterscheiden, wobei eines der Faserbänder als Polypropylen-Vlies ausgeführt sein kann.

Weiterhin beschreibt die US 2015/0246501 A1 einen Auskleidungsschlauch, der eine innenliegende Lage aus Glasvlies besitzt, die mit einer Gewebelage verbunden ist, welche eine erste auf der Außenseite angeordnete Verstärkungslage sowie eine zwischen der Vlieslage und der ersten Verstärkungslage angeordnete zweite Verstärkungslage besitzt. Die beiden Verstärkungslagen sind miteinander sowie mit der innenliegenden Lage aus Glasvlies vernäht, wobei der Auskleidungsschlauch hergestellt wird, indem die miteinander vernähten und zu einer Rolle aufgerollten drei Lagen aus Glasvlies, erste Glas-Verstärkungslage und zweiter Glas-Verstärkungslage überlappend auf einen Wickeldorn aufgewickelt werden.

Weiterhin ist es bekannt, Auskleidungsschläuche durch ein Übereinanderlegen von bahnartigem Material aus einem Vlieswerkstoff, z.B. aus Filz, zu fertigen, wobei eine oder mehrere Lagen des Filz- oder Vlieswerkstoffs jeweils überlappend übereinander gelegt oder auf Stoß vernäht werden. Der so gefertigte Auskleidungsschlauch, der nachfolgend auch als Filzliner bezeichnet wird, wird anschließend in einem zu sanierenden Kanal mit Harz getränkt, welches in einem aufwändigen Verfahren unter Einsatz von Unterdruck in den vergleichsweise dickwandigen Vlieswerkstoff eingebracht wird. Aufgrund des im Vergleich zu Glasfaserwerkstoff günstigen Vlieswerkstoffs und des fehlenden Anteils an Verstärkungsfasern sind die so hergestellten Auskleidungsschläuche zwar günstig in der Herstellung, besitzen aber gegenüber Auskleidungsschläuchen aus Glasfasermaterial eine erheblich geringere Festigkeit.

Eine weitere Unzulänglichkeit der Filzliner ist darin zu sehen, dass diese aus einem vorgefertigten Nadelfilzschlauch mit fester Wandstärke und festem Normdurchmesser - nachfolgend mit " DN " bezeichnet - hergestellt werden. Für jede Wandstärke und jeden Durchmesser muss hierbei jeweils ein eigens angefertigter Nadelfilzschlauch eingesetzt werden. Durch Wickeln hergestellte Filzliner sind demgegenüber bisher nicht bekannt.

Ein weiteres Problem stellt es bei Filzlinem in diesem Zusammenhang dar, dass diese bei größeren Durchmessern aufgrund ihres geringen E-Moduls erheblich größere Wandstärken benötigen, um nach dem Aushärten die geforderten Festigkeitswerte zu erreichen. Obgleich die Wandstärke bei Filzlinem mit einem Durchmesser im Bereich von DN 150 mm bis DN 300 mm lediglich nur ca. 4 mm beträgt, wird die Wandstärke bei Filzlinern mit großen Durchmessern von z.B. mehr als 500 mm schnell doppelt so dick wie bei Glaslinern. Da das Filzmaterial zudem für UV-Licht nur eine sehr geringe Durchlässigkeit aufweist, werden Filzliner in der Praxis nicht mit UV-Licht gehärtet sondern mit Hilfe von Heißdampf oder Heißwasser. Hierbei kommen spezielle Reaktionsharze zum Einsatz, die nicht durch UV-Licht, sondern durch Wärme aushärten.

Demgemäß ist es eine Aufgabe der vorliegenden Erfindung, einen Auskleidungsschlauch zu schaffen, welcher einerseits im Vergleich zu den zuvor beschriebenen Filzlinem eine erhöhte Festigkeit besitzt und welcher andererseits gegenüber einem Auskleidungsschlauch aus Glasfasergewebe deutlich kostengünstiger gefertigt werden kann.

Eine weitere Aufgabe der Erfindung ist es, ein Verfahren zu schaffen, mit welchem sich ein solcher Auskleidungsschlauch im Endlosverfahren fertigen lässt.

Diese Aufgaben werden erfindungsgemäß durch die Merkmale von Anspruch 1 und 9 gelöst.

Weitere Merkmale der Erfindung sind in den Unteransprüchen beschrieben.

Wie die Anmelderin gefunden hat, sind Glasliner mit Durchmessern im Bereich von DN 150 mm - DN 500 mm, insbesondere DN 150 mm - DN 300 mm, mechanisch überdimensioniert, da die geforderte Mindestwandstärke eines solchen Auskleidungsschlauchs generell 4 mm beträgt. Die Werkstoffkennwerte, wie z.B. der Langzeit -E-Modul, liegen aus diesem Grunde über den baulichen Anforderungen, die von den Auftraggebern gefordert werden, um über einen längeren Zeitraum von z.B. 50 Jahren hinweg die notwendige Stabilität eines sanierten Kanals zu gewährleisten.

Wie die Anmelderin weiterhin erkannt hat, sind die Auskleidungsschläuche jedoch in einem bestimmten Durchmesserbereich durch diese Überdimensionierung im Vergleich zu Linern aus günstigeren Werkstoffen, die keine so hohen E-Module besitzen, wie z.B. Auskleidungsschläuche aus Nadelfilz, teurer.

Von der Anmelderin wurde in diesem Zusammenhang ebenfalls erkannt, dass es bei Linern mit Durchmessern im Bereich von DN 150 mm - DN 500 mm und Wandstärken von 3 - 8 mm, vorzugsweise 4 - 6 mm möglich ist, durch den Einsatz einer erfindungsgemäßen Werkstoffkombination aus einem gewickelten bandförmigen Vlieswerkstoff, insbesondere einem vorgetränkten Band aus Vlieswerkstoff und einem darauf angeordneten Glasfaserwerkstoff, der in Längsrichtung des Liners gerichtete, vorzugsweise zumindest teilweise durchgängige Glasfasern oder Glasfaser-Rovings enthält, die Herstellungskosten zu optimieren, ohne hierbei Nachteile bei der Festigkeit und Haltbarkeit in Kauf zu nehmen. Der Glasfaserwerkstoff kann dabei in vorteilhafter Weise auch Glasfasern in Umfangsrichtung enthalten, um gewünschten Falls die Festigkeit des ausgehärteten Auskleidungsschlauchs insgesamt zu erhöhen.

Hierbei stellt es einen besonderen Vorteil der erfindungsgemäßen Auskleidungsschläuche dar, dass diese in derselben Art und Weise hergestellt und eingebaut werden können, wie die bekannten Glasliner, die beispielsweise nach dem in der zuvor genannten WO-A 95/04646 der Anmelderin beschriebenen Verfahren unter Einsatz einer Wickelzunge gefertigt werden. Anders ausgedrückt ergibt sich bei der erfindungsgemäßen Lösung der Vorteil, dass lediglich die auch als Laminat bezeichnete, auf den Innenfolienschlauch gewickelte erste Lage aus einem anderen Material, nämlich einem Vlieswerkstoff, insbesondere einem bandförmigen Kunstfaservlies, vorzugsweise einem kostengünstigen und für UV-Licht durchlässigen Polyestervlies, gewickelt wird. Die übrigen Verfahrensabläufe für das Aufbringen der zweiten Glasfaserlage sowie der darum herum angeordneten Verpackung in Form eines Außenfolienschlauchs können vom Grundprinzip her in abgewandelter Form beibehalten werden.

Bei der erfindungsgemäßen Lösung wird der Auskleidungsschlauch bevorzugt dadurch erzeugt, dass wenigstens ein, vorzugsweise jedoch mehrere Bänder aus Vlieswerkstoff direkt überlappend auf die Außenseite eines vorzugsweise für UV-Licht durchlässigen Innenfolienschlauchs aufgewickelt werden. Hierzu wird beispielsweise der umfänglich geschlossene und optional auf seiner Außenseite mit einer aufkaschierten Vliesschicht versehene Innenfolienschlauch in bekannter Weise über eine im Durchmesser verstellbare Wickelzunge bewegt, um die herum eine in einer Wickelvorrichtung drehbar gelagerte Rolle mit dem darauf aufgerollten, mit Reaktionsharz getränkten Band aus Vlieswerkstoff auf einer Kreisbahn bewegt wird.

Bei der bevorzugten Ausführungsform der Erfindung hat das Kunstfaservlies, d.h. der bandförmige Vlieswerkstoff, eine Dicke von ca. 1 mm; wobei zur Herstellung eines Liners mit einer Vlieslage, die eine Stärke von z.B. 4 mm besitzt, in diesem Falle vier einzelne Bänder aus Vliesmaterial jeweils mit einem axialen Versatz zwischen den Lagen überlappend übereinander gewickelt werden.

Wie die Anmelderin aufgrund von Versuchen gefunden hat, entspricht die Qualität/Festigkeit des erfindungsgemäßen Auskleidungsschlauchs nach dem Aushärten des Reaktionsharzes in etwa der Qualität/Festigkeit eines in herkömmlicher Weise durch ein Übereinanderlegen von unterschiedlichen Nadelfilzlagen hergestellten Nadelfilzliners.

Der erfindungsgemäße Auskleidungsschlauch besitzt den Vorteil, dass durch das aus dem Stand der Technik bisher noch nicht bekannte Wickeln der ersten Vlieslage auf den Innenfolienschlauch die Herstellung von Auskleidungsschläuchen mit verschiedenen Wandstärken und Durchmessern stets aus dem gleichen bandförmigen Vliesmaterial erfolgen kann, was den logistischen Aufwand - und damit die Kosten - bei der Fertigung erheblich reduziert. Demgegenüber werden die bisher bekannten Nadelfilzliner jeweils individuell aus einem vorgefertigten Nadelfilzschlauch mit fester Wandstärke und festem Normdurchmesser hergestellt. Für jede Wandstärke und jeden Normdurchmesser muss hierbei jeweils ein eigens angefertigter Nadelfilzschlauch vorgehalten werden.

Das zusätzlich zu dem mit Reaktionsharz getränkten Band aus Vlieswerkstoff als zweite Lage vorzugsweise unmittelbar auf die erste Lage aufgelegte Glasfaser-Längsband führt weiterhin zu dem Vorteil, dass der gesamte Aufbau in Längsrichtung stabil ist, so dass der Liner mit den üblichen, aus dem Stand der Technik für Glasliner bekannten Zugeinrichtungen in den Kanal eingezogen werden kann. Außerdem wird durch das Glasfaser-Längsband der sonst bei Filzlinem übliche Schrumpf in Umfangs- und Längsrichtung deutlich verringert.

Durch die erfindungsgemäße Hybridbauweise aus gewickelter Vlieslage und aufgelegtem Glasfaser-Längsband wird im ausgehärteten Auskleidungsschlauch das sehr niedrige E-Modul des Vlieswerkstoffs in vorteilhafter Weise mit dem vergleichsweise hohen E-Modul des Glasfaser-Längsbandes kombiniert, so dass das resultierende E-Modul zumindest so hoch liegt, dass bei einem Auskleidungsschlauch mit einem Norm- Außendurchmesser DN von 150 bis 500 mm eine gesamte Wandstärke von ca. 4 mm in jedem Fall statisch ausreicht, um die üblicher Weise geforderten mechanischen Festigkeitskennwerte zu erreichen.

Bei der bevorzugten Ausführungsform der Erfindung besitzt das wenigstens eine Band aus Vlieswerkstoff der ersten Lage eine Dicke zwischen 0,5 mm und 2 mm, vorzugsweise 1 mm. Die bevorzugte Breite liegt hierbei im Bereich zwischen 200 und 700 mm. Hierbei enthält die erste Lage vorzugsweise wenigstens zwei separate, übereinander liegende Bänder aus Vlieswerkstoff. Die erste Lage kann dabei eine Dicke im Bereich zwischen 3 mm und 8 mm, insbesondere zwischen 4 mm und 6 mm besitzen.

Obgleich die Möglichkeit besteht, als Reaktionsharz auch ein von reinen Filzlinem her bekanntes Harz einzusetzen, welches durch Heißdampf oder Heißwasser ausgehärtet wird und hierzu z.B. Peroxide enthält, die bei höheren Temperaturen z.B. oberhalb von 80 °C in Radikale zerfallen, welche die Polymerisation auslösen, kommt bei der bevorzugten Ausführungsform ein Reaktionsharz zum Einsatz welches Fotoinitiatoren enthält und durch Licht, insbesondere UV-Licht ausgehärtet werden kann. Wie die Anmelderin in diesem Zusammenhang in überraschender Weise gefunden hat, ist bei der erfindungsgemäßen Materialpaarung der ersten und zweiten Lage in dem erfindungsgemäßen Wandstärkenbereich die vollständige Durchhärtung der Vlieslage sowie auch der Glasfaserlage in zuverlässiger Weise möglich, obwohl der eingesetzte Vlieswerkstoff der ersten Lage eine gegenüber reinem Glasfasermaterial erheblich geringere Lichtdurchlässigkeit aufweist. Dies eröffnet die Möglichkeit, die erfindungsgemäßen Auskleidungsschläuche in der bisher nur für Auskleidungsschläuche aus Glasfasermaterial bekannten Weise in erheblich kürzerer Zeit und mit einem wesentlich geringeren Aufwand dadurch auszuhärten, dass eine UV-Lichtquelle durch den Innenraum des mit Hilfe von Druckluft aufgestellten Auskleidungsschlauchs hindurchgeführt, insbesondere hindurch gezogen wird. Eine solche Lichtquelle ist beispielsweise aus der DE102005054970A1 bekannt.

Nach einem weiteren der Erfindung zugrunde liegenden Gedanken ist der Vlieswerkstoff ein Kunststoffvlies, insbesondere ein Polyestervlies und/oder ein Polyethylenvlies und/oder ein Polyacrylnitrilvlies oder enthält zumindest ein solches. Hierbei ist der Einsatz eines Gemisches aus den zuvor genannten Vlieswerkstoffen ebenfalls denkbar. In gleicher Weise kann der Vlieswerkstoff zusätzlich auch einen geringen Anteil an Glasfasern, insbesondere Kurzfasern mit einer Länge von z.B. bis zu 10 mm enthalten, um die Festigkeit des ausgehärteten Auskleidungsschlauchs gewünschten Falls um ein gefordertes Maß zu erhöhen.

In diesem Zusammenhang kann es hinsichtlich der Herstellungskosten von besonderem Vorteil sein, wenn der Vlieswerkstoff insbesondere ungerichtete Kurzfasern aus vorzugsweise recyceltem und/oder zerkleinertem Glasfaserwerkstoff, enthält. Wie die Anmelderin gefunden hat, lässt sich durch das Hinzufügen von bereits geringen Mengen an Glas-Kurzfasern, beispielsweise bis zu 20 Gew.- % bezogen auf das Gesamtgewicht des Werkstoffs der ersten Lage, eine erhebliche Steigerung des Elastizitätsmoduls in Umfangsrichtung des Auskleidungsschlauchs erhalten.

Die zweite Lage umfasst ein erstes und ein zweites, sich in Längsrichtung des Auskleidungsschlauchs erstreckendes und überlappend gelegtes Glasfaserband, vorzugsweise ein Glasfasergewebe, das vorzugsweise direkt an die Unterseite der gewickelten ersten Vlieslage angelegt, bzw. von oben auf diese aufgelegt wird, nachdem die gewickelte Vlieslage aus dem Bereich der Wickelvorrichtung ausgetreten ist, in dem die Rollen aus bandförmigem Vlieswerkstoff um den Innenfolienschlauch herum geführt werden.

Um den in der zuvor beschriebenen Weise gefertigten Auskleidungsschlauch gegen die Einstrahlung von UV-Licht zu schützen und dadurch eine vorzeitige Aushärtung des Reaktionsharzes zu verhindern, ist bei der bevorzugten Ausführungsform der Erfindung um die zweite Lage herum ein Außenfolienschlauch aus einem umfänglich dehnbaren lichtundurchlässigen Kunststoffmaterial angeordnet, das insbesondere als Verbundfolie aus Polyethylen, Polyamid und Polyethylen, ausgeführt ist. Diese liegt so dicht wie möglich an der Außenseite der zweiten Lage an und stellt zusätzlich sicher, dass sich die erste und zweite Lage beim Einziehen des Auskleidungsschlauchs in einen zu sanierenden Kanal nicht relativ zueinander verschieben oder gar durch hervorstehende Bauwerksbestandteile beschädigt werden.

Nach einem weiteren der Erfindung zugrunde liegenden Gedanken umfasst ein Verfahren zur Herstellung eines zuvor beschriebenen Auskleidungsschlauchs die folgenden Verfahrensschritte:
- Bilden einer ersten zusammenhängenden Vlieslage durch überlappendes schraubenförmiges Wickeln von wenigstens einem Band, vorzugsweise jedoch von zwei oder mehr Bändern aus Vlieswerkstoff, die mit einem flüssigen Reaktionsharz getränkt sind, um einen umfänglich geschlossenen Innenfolienschlauch, der insbesondere aus einem für UV-Licht durchlässigen Werkstoff besteht, und
- Anordnen wenigstens eines ersten und zweiten überlappend gelegten, mit flüssigem Reaktionsharz getränkten Bandes aus Glasfasermaterial auf der Vlieslage, wobei das erste Band sich in Längsrichtung des Auskleidungsschlauchs erstreckende Glasfasern enthält, und ein sich in Längsrichtung des Auskleidungsschlauchs erstreckendes Glasfaser-Längsband ist, das als Längzugband dient, an dem der Auskleidungsschlauch in einen zu sanierenden Kanal einziehbar ist.

Das erfindungsgemäße Verfahren besitzt den Vorteil, dass sich der Durchmesser und die Wandstärke des erfindungsgemäßen Auskleidungsschlauchs auf einfache Weise dadurch verändern lassen, dass lediglich der Durchmesser der für den Wickelvorgang eingesetzten Wickelzunge radial auf den gewünschten Normdurchmesser eingestellt wird und eine der Wandstärke des Auskleidungsschlauchs entsprechende Anzahl von Bändern aus Vlieswerkstoff mit einer vorgegebenen Dicke um den Innenfolienschlauch herum gewickelt werden. Hierbei ist es im Gegensatz zu der zuvor erwähnten Fertigung von Filzlinern nicht erforderlich, den Vlieswerkstoff entsprechend dem gewünschten Durchmesser des Auskleidungsschlauchs individuell zuzuschneiden, was den Arbeitsaufwand sowie den logistischen Aufwand erheblich reduziert.

Bei der bevorzugten Ausführungsform des erfindungsgemäßen Verfahrens wird das Band aus Vlieswerkstoff in vorteilhafter Weise vor dem Wickeln mit dem Reaktionsharz getränkt. Dies kann beispielsweise dadurch erfolgen, dass das Band vor dem Aufrollen zu einer Rolle durch einen mit Harz gefüllten Behälter gezogen und überschüssiges Harz abgerakelt wird.

Die Erfindung wird nachfolgend mit Bezug auf die Zeichnungen anhand von bevorzugten Ausführungsformen beschrieben.

In den Zeichnungen zeigt:

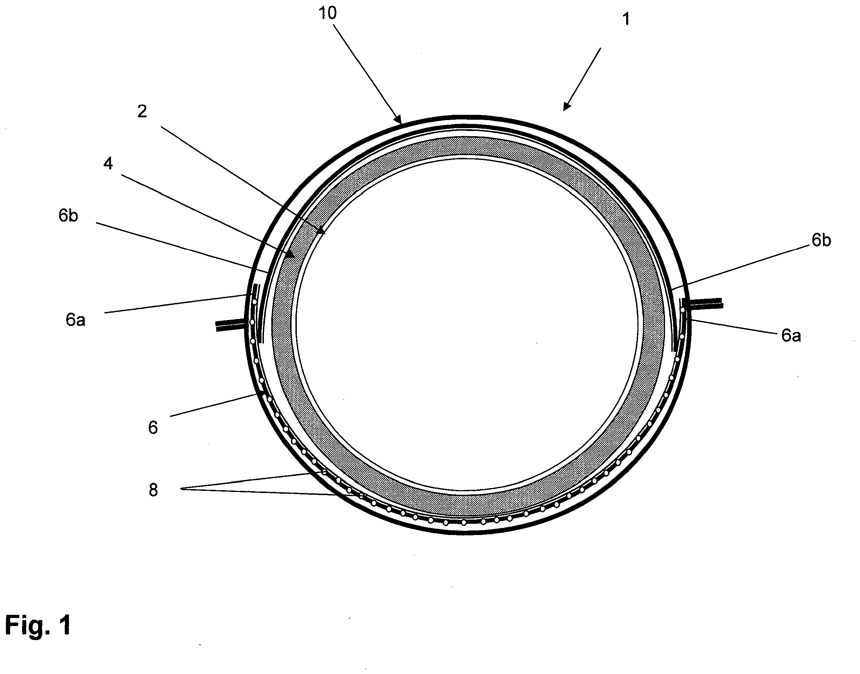

- Fig. 1: eine schematische Querschnittsansicht des erfindungsgemäßen Auskleidungsschlauchs.

Wie in der Darstellung von Fig. 1 gezeigt ist, umfasst ein Auskleidungsschlauch 1 zur Sanierung von nicht näher gezeigten Kanälen und Abwasserleitungen einen Innenfolienschlauch 2, auf dessen Außenseite eine erste Lage 4 aus einem bandförmigen Vlieswerkstoff, insbesondere einem Filz oder Polyestervlies, aufgebracht ist. Zum Aufbringen der ersten Lage 4 wird dabei eine nicht näher gezeigte Wickelvorrichtung eingesetzt, wie sie beispielsweise in der WO-A 95/04646 der Anmelderin beschrieben ist. Auf die wenigstens eine Lage 4 aus bandförmigem Vlieswerkstoff wird anschließend eine zweite Lage 6 in Form eines mit flüssigem Reaktionsharz getränkten ersten Bandes 6a aus Glasfasermaterial aufgebracht, welches sich in Längsrichtung des Auskleidungsschlauchs erstreckende Glasfasern 8 besitzt. Das erste Band 6a aus Glasfasermaterial ist vorzugsweise ein Glasfasergewebe, welches vorzugsweise ebenfalls in Querrichtung zu den Glasfasern 8 verlaufende Glasfasern besitzt, die in der Figur nicht näher gezeigt sind. Das erste Band 6a aus Glasfasermaterial wird bevorzugt nach dem Wickeln der ersten Lage 4 aus Vlieswerkstoff unmittelbar auf der Unterseite derselben angeordnet wird und dient als Längszugband, an welchem der Auskleidungsschlauch 1 in einen zu sanierenden Kanal eingezogen wird.

Wie der Darstellung der Fig. 1 weiterhin entnommen werden kann, ist auf der Oberseite der ersten Vlieslage 4 weiterhin ein zweites Band 6b aus Glasfasermaterial angeordnet, welches vorzugsweise ebenfalls ein Glasfasergewebe ist, und welches das erste Band 6a beiderseits in einem Bereich von z.B. 30 bis 50 mm überlappt.

Um die zweite Lage 6 herum ist bei der bevorzugten Ausführungsform der Erfindung vorzugsweise ein Außenfolienschlauch 10 angeordnet, der beim Einsatz von Reaktionsharzen, die durch Bestrahlen mit Licht, insbesondere UV-Licht, ausgehärtet werden, zumindest für die jeweils eingesetzte Lichtwellenlänge undurchlässig ist.

Um den Außenfolienschlauch 10 herum kann weiterhin bei einer nicht näher gezeigten Ausführungsform der Erfindung ein weiterer Schutzschlauch aus reißfestem Material angeordnet sein, welcher einen sich über die Länge des Schutzschlauchs hinweg erstreckenden umfänglich dehnbaren Abschnitt aufweist, der beim Einziehen des Schlauchs in den Kanal umfänglich verkürzt ist und erst beim Expandieren des Auskleidungsschlauchs 1 mit Hilfe von Druckluft umfänglich aufgeweitet wird, um eine radiale Aufweitung der ersten und zweiten Lage 4, 6 zu ermöglichen, so dass sich die Außenseite des Auskleidungsschlauchs 1 beim Aushärten an die Kanalinnenwand anlegen kann.

### Bezugszeichenliste

- 1: Auskleidungsschlauch
- 2: Innenfolienschlauch
- 4: erste Lage aus bandförmigem Vlieswerkstoff
- 6: zweite Lage aus Glasfasermaterial
- 6a: erstes Band aus Glasfasermaterial
- 6b: zweites Band aus Glasfasermaterial
- 8: in Längsrichtung des Auskleidungsschlauchs verlaufende Glasfasern
- 10: Außenfolienschlauch

## Patentansprüche

1. Auskleidungsschlauch (1) zur Sanierung von Kanälen und Abwasserleitungen, mit einem Innenfolienschlauch (2), einer auf diesem angeordneten ersten Lage (4) aus Vlieswerkstoff sowie einer auf der Lage (4) aus Vlieswerkstoff angeordneten zweiten Lage (6) aus Glasfasermaterial, welche ein erstes und ein zweites überlappend gelegtes Glasfaserband umfasst, wobei
die erste Lage (4) wenigstens ein überlappend gewickeltes Band aus Vlieswerkstoff enthält, welches mit einem durch Licht oder Wärme härtbaren flüssigen Reaktionsharz getränkt ist, und die zweite Lage (6) wenigstens ein erstes mit flüssigem Reaktionsharz getränktes Band (6a) aus Glasfasermaterial enthält, welches sich in Längsrichtung des Auskleidungsschlauchs erstreckende Glasfasern (8) besitzt,
**dadurch gekennzeichnet,**
**dass** der Vlieswerkstoff ein Kunststoffvlies ist, und dass das erste Band (6a) ein sich in Längsrichtung des Auskleidungsschlauchs (1) erstreckendes Glasfaser-Längsband ist, das als Längszugband dient, an dem der Auskleidungsschlauch (1) in einen zu sanierenden Kanal einziehbar ist.

2. Auskleidungsschlauch nach Anspruch 1,
**dadurch gekennzeichnet,**
**dass** das wenigstens eine Band aus Vlieswerkstoff der ersten Lage (4) eine Dicke zwischen 0,5 mm und 2 mm, vorzugsweise 1 mm und eine Breite zwischen 200 und 700 mm besitzen, und/oder dass die erste Lage (4) wenigstens zwei separate übereinanderliegende Bänder aus Vlieswerkstoff enthält.

3. Auskleidungsschlauch nach Anspruch 1 oder 2,
**dadurch gekennzeichnet,**
**dass** die erste Lage (4) eine Dicke im Bereich zwischen 3 mm und 8 mm, insbesondere zwischen 4 mm und 6 mm besitzt.

4. Auskleidungsschlauch nach einem der vorhergehenden Ansprüche,
**dadurch gekennzeichnet,**
**dass** das Reaktionsharz ein durch UV-Licht härtbares Reaktionsharz ist.

5. Auskleidungsschlauch nach einem der vorhergehenden Ansprüche,
**dadurch gekennzeichnet,**
**dass** der Vlieswerkstoff ein Polyestervlies und/oder ein Polyethylenvlies und/oder ein Polyacrylnitrilvlies ist oder ein solches enthält.

6. Auskleidungsschlauch nach Anspruch 5,
**dadurch gekennzeichnet,**
**dass** der Vlieswerkstoff zusätzlich Glasfasern, insbesondere ungerichtete Kurzfasern aus vorzugsweise recyceltem und/oder zerkleinertem Glasfaserwerkstoff, enthält.

7. Auskleidungsschlauch nach einem der vorhergehenden Ansprüche,
**dadurch gekennzeichnet,**
**dass** die zweite Lage (6) ein erstes und ein zweites überlappend gelegtes Glasfaserband (6a, 6b), vorzugsweise ein Glasfasergewebe, umfasst.

8. Auskleidungsschlauch nach einem der vorhergehenden Ansprüche,
**dadurch gekennzeichnet,**
**dass** um die zweite Lage (6) herum ein Außenfolienschlauch (10) aus einem umfänglich dehnbaren, vorzugsweise lichtundurchlässigen Kunststoffmaterial, insbesondere eine Verbundfolie aus Polyethylen, Polyamid und Polyethylen, angeordnet ist.

9. Verfahren zur Herstellung eines Auskleidungsschlauchs nach einem der Ansprüche 1 bis 8, mit den folgenden Verfahrensschritten:
Bilden einer ersten zusammenhängenden Vlieslage durch überlappendes schraubenförmiges Wickeln wenigstens eines mit einem flüssigen Reaktionsharz getränkten Bandes aus Vlieswerkstoff, welcher ein Kunststoffvlies ist, um einen umfänglich geschlossenen, insbesondere für UV-Licht durchlässigen Innenfolienschlauch und Anordnen eines ersten und zweiten überlappend gelegten, mit flüssigem Reaktionsharz getränkten Bandes (6a, 6b) aus Glasfasermaterial auf der Vlieslage, wobei das erste Band (6a) sich in Längsrichtung des Auskleidungsschlauchs erstreckende Glasfasern enthält, und
ein sich in Längsrichtung des Auskleidungsschlauchs (1) erstreckendes Glasfaser-Längsband ist, das als Längszugband dient, an dem der Auskleidungsschlauch in einen zu sanierenden Kanal einziehbar ist.

10. Verfahren nach Anspruch 9,
**dadurch gekennzeichnet,**
**dass** das Band aus Vlieswerkstoff vor dem Wickeln mit dem Reaktionsharz getränkt wird.

## Claims

1. Liner tube (1) for the rehabilitation of sewers and drains, having an internal tubular film (2), a first ply (4) of non-woven material disposed on the latter, and a second ply (6) of glass-fibre material which is disposed on the ply (4) of non-woven material and comprises a first and a second glass-fibre tape placed in an overlapping manner, wherein the first ply (4) contains at least one tape of non-woven material which is wound in an overlapping manner and is impregnated with a liquid reaction resin that is able to be cured by light or heat, and the second ply (6) contains at least one first tape (6a) from glass-fibre material which is impregnated with liquid reaction resin and which comprises glass fibres (8) that extend in the longitudinal direction of the liner tube,
**characterized in that**
the non-woven material is a plastics non-woven material, and **in that** the first tape (6a) is a glass-fibre longitudinal tape which extends in the longitudinal direction of the liner tube (1) and serves as a longitudinal reinforcement tape on which the liner tube (1) is able to be pulled into a sewer to be rehabilitated.

2. Liner tube according to Claim 1,
**characterized in that**
the at least one tape of non-woven material of the first ply (4) has a thickness between 0.5 mm and 2 mm, preferably 1 mm, and a width between 200 and 700 mm, and/or **in that** the first ply (4) contains at least two separate tapes of non-woven material that lie on top of one another.

3. Liner tube according to Claim 1 or 2,
**characterized in that**
the first ply (4) has a thickness in the range between 3 mm and 8 mm, in particular between 4 mm and 6 mm.

4. Liner tube according to one of the preceding claims,
**characterized in that**
the reaction resin is a reaction resin that is able to be cured by UV light.

5. Liner tube according to one of the preceding claims,
**characterized in that**
the non-woven material is or contains a polyester non-woven and/or a polyethylene non-woven and/or a polyacrylonitrile non-woven.

6. Liner tube according to Claim 5,
**characterized in that**
the non-woven material additionally contains glass fibres, in particular non-oriented short fibres from preferably recycled and/or comminuted glass-fibre material.

7. Liner tube according to one of the preceding claims,
**characterized in that**
the second ply (6) comprises a first and a second glass-fibre tape (6a, 6b), preferably a woven glass-fibre fabric, placed in an overlapping manner.

8. Liner tube according to one of the preceding claims,
**characterized in that**
an external tubular film (10) from a circumferentially expandable, preferably light-impermeable plastics material, in particular a composite film from polyethylene, polyamide and polyethylene, is disposed about the second ply (6).

9. Method for producing a liner tube according to one of Claims 1 to 8, comprising the following method steps:
- forming a first contiguous non-woven ply by helically winding in an overlapping manner at least one tape from non-woven material impregnated with a liquid reaction resin, said non-woven material being a plastics non-woven material, about a circumferentially closed, in particular UV light-permeable, internal tubular film, and disposing on the non-woven ply a first and a second tape (6a, 6b) from glass-fibre material placed in an overlapping manner and impregnated with liquid reaction resin, wherein the first tape (6a) contains glass fibres extending in the longitudinal direction of the liner tube and is a glass-fibre longitudinal tape which extends in the longitudinal direction of the liner tube (1) and serves as a longitudinal reinforcement tape on which the liner tube is able to be pulled into a sewer to be rehabilitated.

10. Method according to Claim 9,
**characterized in that**
the tape from non-woven material is impregnated with the reaction resin prior to winding.

## Revendications

1. Tuyau de revêtement (1) destiné à la rénovation de canalisations et de conduites d'évacuation d'eaux usées, comportant un tuyau en film interne (2), une première couche (4) constituée de matériau non-tissé disposée sur celui-ci, ainsi qu'une deuxième couche (6) constituée de matériau à base de fibres de verre disposée sur la couche (4) constituée de matériau non-tissé, qui comprend une première et une deuxième bande à base de fibres de verre posée en chevauchement,
la première couche (4) comportant au moins une bande constituée de matériau non-tissé, enroulée en chevauchement, qui est imprégnée avec une résine réactive liquide durcissable par la lumière ou la chaleur, et la deuxième couche (6) comportant au moins une première bande (6a) constituée de matériau à base de fibres de verre, imprégnée avec une résine réactive liquide, qui possède des fibres de verre (8) s'étendant dans la direction longitudinale du tuyau de revêtement,
**caractérisé en ce que**
le matériau non-tissé est un non-tissé en matière plastique, et **en ce que** la première bande (6a) est une bande longitudinale à base de fibres de verre, s'étendant dans la direction longitudinale du tuyau de revêtement (1), qui sert de bande de traction longitudinale, sur laquelle le tuyau de revêtement (1) peut être inséré dans une canalisation à rénover.

2. Tuyau de revêtement selon la revendication 1,
**caractérisé en ce que**
ladite au moins une bande constituée de matériau non-tissé de la première couche (4) a une épaisseur comprise entre 0,5 mm et 2 mm, de préférence 1 mm, et une largeur comprise entre 200 et 700 mm, et/ou **en ce que** la première couche (4) comporte au moins deux bandes distinctes superposées, constituées de matériau non-tissé.

3. Tuyau de revêtement selon la revendication 1 ou 2,
**caractérisé en ce que**
la première couche (4) a une épaisseur dans la plage comprise entre 3 mm et 8 mm, en particulier entre 4 mm et 6 mm.

4. Tuyau de revêtement selon l'une quelconque des revendications précédentes,
**caractérisé en ce que**
la résine réactive est une résine réactive durcissable par la lumière UV.

5. Tuyau de revêtement selon l'une quelconque des revendications précédentes,
**caractérisé en ce que**
le matériau non-tissé est un non-tissé polyester et/ou un non-tissé polyéthylène et/ou un non-tissé polyacrylonitrile ou contient un tel non-tissé.

6. Tuyau de revêtement selon la revendication 5,
**caractérisé en ce que**
le matériau non-tissé comporte en outre des fibres de verre, en particulier des fibres courtes non orientées à base de préférence de matériau fibre de verre recyclé et/ou broyé.

7. Tuyau de revêtement selon l'une quelconque des revendications précédentes,
**caractérisé en ce que**
la deuxième couche (6) comprend une première et une deuxième bande à base de fibres de verre (6a, 6b), posée en chevauchement, de préférence un tissu de fibres de verre.

8. Tuyau de revêtement selon l'une quelconque des revendications précédentes,
**caractérisé en ce**
**qu'**un tuyau en film externe (10) constitué d'un matériau en matière plastique de préférence opaque à la lumière, étirable sur la circonférence, en particulier un film composite à base de polyéthylène, polyamide et polyéthylène, est disposé autour le la deuxième couche (6).

9. Procédé pour la fabrication d'un tuyau de revêtement selon l'une quelconque des revendications 1 à 8, comportant les étapes de procédé suivantes :
formation d'une première couche de non-tissé cohérente par enroulement hélicoïdal en chevauchement d'au moins une bande constituée de matériau non-tissé qui est un non-tissé en matière plastique, imprégnée avec une résine réactive liquide, autour d'un tuyau en film interne fermé sur sa circonférence, en particulier transparent à la lumière UV et disposition sur la couche de non-tissé d'une première et d'une deuxième bande (6a, 6b) constitué de matériau à base de fibres de verre, imprégnée avec une résine réactive liquide, posée en chevauchement, la première bande (6a) comportant des fibres de verre s'étendant dans la direction longitudinale du tuyau de revêtement, et étant une bande longitudinale à base de fibres de verre, s'étendant dans la direction longitudinale du tuyau de revêtement (1), qui sert de bande de traction longitudinale, sur laquelle le tuyau de revêtement (1) peut être inséré dans une canalisation à rénover.

10. Procédé selon la revendication 9,
**caractérisé en ce que**
la bande constituée de matériau non-tissé est imprégnée avec la résine réactive avant l'enroulement.
